# EUROPÄISCHE PATENTSCHRIFT

(11) **EP 1 450 017 B1**
(45) Veröffentlichungstag und Bekanntmachung des Hinweises auf die Patenterteilung: **07.12.2005**
(21) Anmeldenummer: 03025272.0
(22) Anmeldetag: 06.11.2003
(51) Int. Cl.: F01N 7/10, F01N 7/18

(54) **Anordnung zur Überführung der Abgase eines Verbrennungsmotors in eine Abgasleitung**
Arrangement to direct exhaust gas from combustion engine to exhaust line
Dispositif pour diriger les gaz d'échappement d'un moteur à combustion vers une ligne d'échappement

(30) Priorität: 20.02.2003 DE 10307028
(43) Veröffentlichungstag der Anmeldung: 25.08.2004
(73) Patentinhaber: Benteler Automobiltechnik GmbH, 33104 Paderborn (DE)
(72) Erfinder: Smatloch, Christian, Dr., 33100 Paderborn (DE)
(74) Vertreter: Bockermann, Rolf

(56) Entgegenhaltungen:
- EP-A- 1 016 778
- WO-A-02/073010
- US-A- 6 062 024
- PATENT ABSTRACTS OF JAPAN vol. 006, no. 187 (M-158), 25. September 1982 (1982-09-25) & JP 57 093627 A (YAMAHA MOTOR CO LTD), 10. Juni 1982 (1982-06-10)

## Beschreibung

Die Erfindung betrifft eine Anordnung zur Überführung der Abgase eines mehrere Zylinder umfassenden Verbrennungsmotors über eine Abgasturbine in eine Abgasleitung.

Abgassammler in Form von Blechkonstruktionen bilden Stand der Technik. Fachspezifisch werden diese auch als gebaute Krümmer bezeichnet. Des Weiteren zählen gebaute luftspaltisolierte Turboladergehäuse zum Stand der Technik (DE 100 22 052 A1).

Darüber hinaus ist es bekannt, bei Dieselmotoren verwendete Gusskrümmer in sogenannter integrierter Bauweise herzustellen. Hierbei wird die heiße Abgase leitende Turboladerseite in einem Stück mit einem Abgassammler gegossen (US 606024).

Bei Ottomotoren wird in den meisten Fällen ein gegossenes Turboladergehäuse an einen gebauten Krümmer geflanscht.

Ferner ist ein gebautes zweiflutiges Turboladergehäuse ohne Luftspaltisolierung für z.B. Vierzylindermotoren bekannt (GB 1 263 932).

Aus dem vorstehend genannten Stand der Technik ergeben sich jedoch einige Probleme. So sind Integralbauteile für Dieselmotoren zwar kostengünstig und auch auf Dauer haltbar, indessen entziehen sie dem bei Dieselmotoren ohnehin "kalten" Abgas aber noch mehr Wärmeenergie, so dass die umweltbedingt geltenden Emissionsvorschriften nur mit einem zusätzlichen innermotorischen Aufwand und erhöhten Kraftstoffverbrauch aufgrund der sogenannten Katalysator-Heizmaßnahmen erreicht werden können.

Bei Ottomotoren sind die Abgastemperaturen so hoch, dass Turboladergehäuse aus besonders kostenintensiven hochlegierten Gusswerkstoffen gefertigt werden müssen. Diese werden dann an einen kostengünstigeren Gusskrümmer oder an gebaute Krümmer geflanscht. Dadurch ist aber ein zusätzlicher Bauraum erforderlich. Auch werden mehr Bauteile benötigt, die zwangsläufig Quellen für Undichtigkeiten sind.

Der Erfindung liegt - ausgehend vom Stand der Technik - die Aufgabe zugrunde, eine Anordnung zur Überführung der Abgase eines Verbrennungsmotors über eine Abgasturbine in eine Abgasleitung zu schaffen, bei welcher durch weniger Bauteile eine höhere Wärmeenergiemenge zur Wirkungsgradsteigerung des Turboladers und damit des gesamten Antriebsaggregats bei geringerem Wärmeeintrag in den Motorraum und insgesamt kompakter Bauweise zur Verfügung gestellt werden kann.

Diese Aufgabe wird mit den im Patentanspruch 1 angegebenen Merkmalen gelöst.

Kernpunkt der Erfindung bildet der Sachverhalt, dass nunmehr ein zweiflutiges Gasführungsgehäuse aus drei quer aneinander gesetzten Schalenelementen aus Stahlblech bereit gestellt wird, das Abgase aus den Zylindern eines Verbrennungsmotors auf möglichst "rundem" Wege der Abgasturbine des Turboladers direkt zuführt. Hierunter wird eine weitgehend laminare Strömungsführung verstanden. Aufgrund der Verringerung der Abgas leitenden Komponenten wird neben einer erhöhten Dynamik des gesamten Fahrzeugantriebs ein verbessertes Ansprechverhalten des Antriebs-, Abgas- und Schadstoffreduktionssystems erzielt. Da aufgrund des direkten Anschlusses des Gasführungsgehäuses über die Flanschplatte an den Motorblock eines Verbrennungsmotors keine zusätzlichen Wärmebrücken existieren, wird ein geringerer Wärmeeintrag in den Motorraum erzielt, so dass auch weniger Schäden an benachbarten Bauteilen zu erwarten sind. Es kann des Weiteren eine höhere Wärmeenergiemenge zur Wirkungsgradsteigerung des Turboladers und somit auch des Antriebsaggregats zur Verfügung gestellt werden. Es handelt sich mithin bei der Erfindung um ein System mit geringer "thermischer Masse", so dass auch bei den sogenannten "kalten" Dieselmotoren ein schnelles Anspringen (Light off) des Katalysators erreicht werden kann.

Durch die Ausbildung als zweiflutiges Gasführungsgehäuse wird ferner eine gleichmäßigere Beaufschlagung des Laufrads der Abgasturbine mit Abgas erzielt.

Die Schalenelemente werden durch spanlose Umformung aus vergleichsweise dünnen Stahlblechen erzeugt. Die Blechdicke bewegt sich vorzugsweise zwischen 0,3 mm und 1,2 mm. Sie werden untereinander, mit der Flanschplatte und mit dem Laufradlager durch Schweißung verbunden.

Nach Patentanspruch 2 wird das mittlere Schalenelement des Gasführungsgehäuses aus einer kreisringförmigen, sich in einer Ebene erstreckenden Scheibe mit exzentrisch versetzter kreisrunder Öffnung und aus sich von der Scheibe im wesentlichen radial erstreckenden, bezüglich der Scheibenebene einmal in die eine Querrichtung und einmal in die andere Querrichtung rinnenartig gekrümmten Fortsätzen gebildet. Während die Scheibe eine Trennwand des Gasführungsgehäuses im Bereich der Spiralkanäle bildet, sind die Fortsätze hälftige Bestandteile der Gaskanäle. Bei einem Vierzylindermotor sind z.B. die beiden äußeren Fortsätze bezüglich der Scheibenebene in die eine Querrichtung rinnenartig gekrümmt, während die beiden mittleren Fortsätze gegengleich in die andere Querrichtung rinnenartig gekrümmt sind.

Sowohl das äußere 1.Schalenelement als auch das äußere 2.Schalenelement sind hinsichtlich ihrer umfangsseitigen Außenkonturen an das mittlere Schalenelement angepasst. Das heißt, sie weisen kreisringförmige Scheiben mit exzentrisch versetzten Öffnungen und sich von den Scheiben aus im wesentlichen radial erstreckende Fortsätze auf.

Zur Bildung der Gaskanäle und der Spiralkanäle sind die äußeren 1. und 2. Schalenelemente jedoch jeweils für sich in entgegengesetzte Richtungen rinnenartig gekrümmt. Auf diese Weise werden durch die Fortsätze der äußeren Schalenelemente und die Fortsätze des mittleren Schalenelements die Gaskanäle gebildet, während durch die rinnenartig gekrümmten Scheiben der beiden äußeren Schalenelemente und die ebene Scheibe des mittleren Schalenelements die nebeneinander verlaufenden Spiralkanäle begrenzt werden. Die Verbindung der Schalenelemente erfolgt jeweils an den Längskanten der Fortsätze und umfangsseitig der Scheiben.

Das äußere 2.Schalenelement weist darüberhinaus noch eine von der Scheibe aus sich quer erstreckende Aushalsung auf, wodurch ein diffusorartiger Mantel für das Laufrad und ein sich anschließender zylindrischer Gasauslassstutzen gebildet werden.

Bei einem Vierzylindermotor weist beispielsweise das äußere 1.Schalenelement zwei Fortsätze auf, die mit den beiden mittleren Fortsätzen des mittleren Schalenelements verbunden werden, wohingegen das äußere 2.Schalenelement zwei Fortsätze besitzt, die mit den zum 1.Schalenelement gegengleich gekrümmten äußeren Fortsätzen des mittleren Schalenelements verbunden werden.

Um der höheren Wärmebelastung und den damit erheblich höheren Dehnungen im Vergleich zu den äußeren Schalenelementen Rechnung zu tragen, kann nach Patentanspruch 3 das mittlere Schalenelement im Übergangsbereich von der ebenen Scheibe auf die gegengleich rinnenartig gekrümmten Fortsätze wenigstens eine Entlastungssicke aufweisen. Vorzugsweise erstreckt sich je eine Entlastungssicke bis zu den Scheitelbereichen der äußeren Fortsätze.

Damit der Wärmeeintrag in den Motorraum reduziert werden kann und folglich weniger Schäden an den benachbarten Bauteilen entstehen können, ist entsprechend den Merkmalen des Patentanspruchs 4 das Gasführungsgehäuse unter Bildung eines Luftspalts in ein aus zwei Außenschalen gebildetes Mantelgehäuse eingebettet. Hierbei sind die Außenschalen miteinander am radial äußeren Umfang, mit der Flanschplatte, umfangsseitig des Laufradlagers und stirnseitig des Gasauslassstutzens verschweißt.

Temperaturunterschiede und Unterschiede in den Werkstoffen des Mantelgehäuses einerseits und des Gasführungsgehäuses andererseits können zu Wärmespannungen führen. Um den hierdurch eintretenden Problemen Rechnung zu tragen, sieht Patentanspruch 5 vor, im Längenverlauf der Gaskanäle gegebenenfalls Schiebesitze vorzusehen.

Entsprechend den Merkmalen des Patentanspruchs 6 können die Gaskanäle auch relativ verschieblich, jedoch dicht in die Durchgangsöffnungen der Flanschplatte eingreifen. Auf diese Weise werden die erforderlichen Dehnungsausgleiche realisiert.

Weiterhin können z.B. bei Verbrennungsmotoren ohne Schwingungstiger gemäß Patentanspruch 7 Drahtgestricke zur Reduzierung der auftretenden Schwingungsbelastungen vorgesehen werden. Diese Drahtgestricke sind dann bevorzugt zwischen das Gasführungsgehäuse und den Gehäusemantel integriert.

Nach den Merkmalen des Patentanspruchs 8 ist es ferner von Vorteil, wenn durch Überlappung von sich etwa parallel zur Drehachse des Laufrads erstreckenden radial äußeren Axialschenkeln des Mantelgehäuses, und zwar unter Bildung eines etwa V-förmigen Spalts, eine deutlich verbesserte Berstsicherheit erreicht wird. In diesem Zusammenhang ist es von Bedeutung, dass sich die beiden Axialschenkel nicht über ihre gesamte Länge berühren, sondern dass nur die Stirnseite des übergreifenden Axialschenkels an der äußeren Oberfläche des eingreifenden Axialschenkels durch Schweißung fixiert ist.

Um die Umwandlung der kinetischen Energie durch Teilchen hoher Geschwindigkeit in Verformungsenergie zu verbessern, ist es entsprechend den Merkmalen des Patentanspruchs 9 möglich, in den Spalt zwischen den radial äußeren Axialschenkeln der Außenschalen des Mantelgehäuses kinetische Energie in Verformungsenergie umwandelnde Mittel zu integrieren. Solche Mittel können z.B. durch Drahtgestricke oder zusätzliche Blecheinlagen gebildet sein, die in den Spalt eingebettet werden.

Schließlich kann relativ einfach und in wirtschaftlicher Weise ein Überströmkanal - ein sogenannter Bypass - in die erfindungsgemäße Anordnung integriert werden. Dazu sehen die Merkmale des Patentanspruchs 10 vor, dass die mit dem Gasauslassstutzen verschweißte Außenschale des Mantelgehäuses mit einer Öffnung versehen ist. In die Öffnung fasst ein Austrittsstutzen des äußeren 2.Schalenelements und ist in einer die Öffnung bildenden Aushalsung verschweißt. Die Mündung des Austrittsstutzens ist durch eine Schaltklappe verschließbar. Der Außenschale ist eine Auffangschale mit Auslassöffnung vorgelagert, die mit dem Gasauslassstutzen axial ausgerichtet ist. Diese weitere Ausgestaltung des erfindungsgemäßen Grundgedankens macht sich insbesondere bei einer senkrechten Anordnung der Laufradachse bemerkbar, und zwar bei einem Ladersystem, das mit einer verstellbaren Turbinengeometrie (VTG) arbeitet.

Die Erfindung ist nachfolgend anhand von in den Zeichnungen dargestellten Ausführungsbeispielen näher erläutert. Es zeigen:
- Figur 1: im schematischen vertikalen Längsschnitt eine Anordnung zur Überführung der Abgase eines Verbrennungsmotors über eine Abgasturbine in eine Abgasleitung;
- Figur 2: eine Anordnung gemäß Figur 1 entsprechend einer weiteren Ausführungsform;
- Figur 3: in perspektivischer Explosionsdarstellung ein Gasführungsge- häuse für die Anordnung der Figuren 1 und 2;
- Figur 4: einen Ausschnitt der Darstellung der Figur 2 gemäß einer weiteren Ausführungsform;
- Figur 5: ein Bauteil der Ausführungsform der Figur 4 in der Perspektive und
- Figur 6: im vertikalen Längsschnitt die Darstellung der Figur 2 gemäß einer weiteren Ausführungsform.

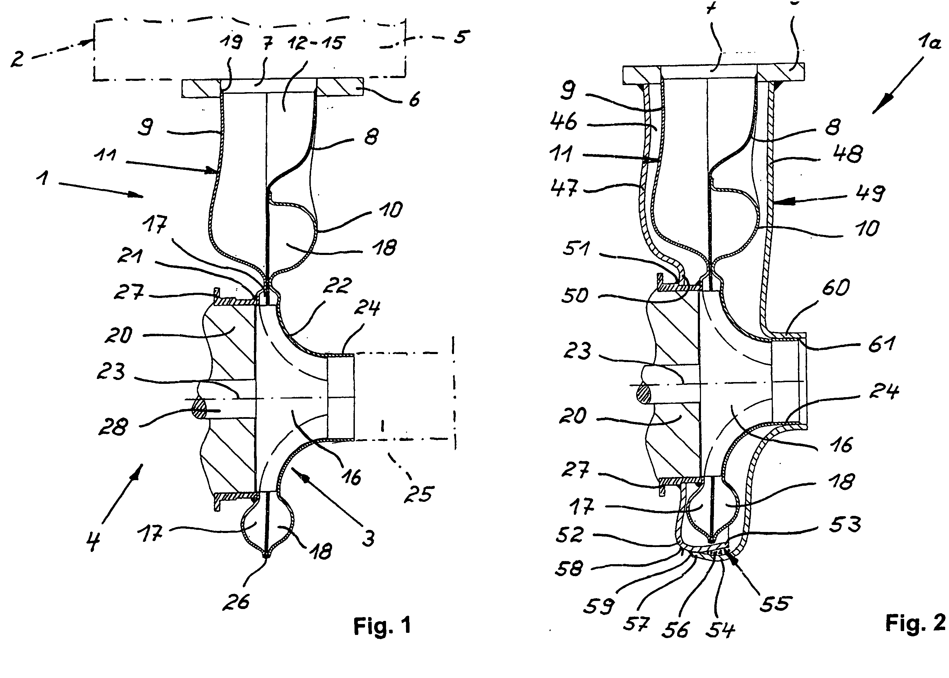

Mit 1 ist in der Figur 1 eine Anordnung zur Überführung der Abgase eines mehrere Zylinder umfassenden, lediglich schematisch angedeuteten Verbrennungsmotors 2 über eine Abgasturbine 3 eines Turboladers 4 in eine Abgasleitung 25 bezeichnet.

Die Anordnung 1 weist eine unmittelbar am Motorblock 5 des Verbrennungsmotors 2 lösbar befestigte Flanschplatte 6 mit einer der Zylinderanzahl entsprechenden Anzahl von in Reihe angeordneten Durchgangsöffnungen 7 auf.

Bei dem in der Figur 1 angedeuteten Verbrennungsmotor 2 handelt es sich z.B. um einen Vierzylindermotor.

Ferner umfasst die Anordnung 1 ein aus drei quer aneinander gesetzten Schalenelementen 8, 9, 10 aus Stahlblech gebildetes zweiflutiges Gasführungsgehäuse 11. Bei diesem Gasführungsgehäuse 11 sind durch ein mittleres Schalenelement 8 und durch zwei äußere Schalenelemente 9, 10 in die Durchgangsöffnungen 7 dicht eingreifende Gaskanäle 12-15 und umfangsseitig eines Laufrads 16 der Abgasturbine 3 zwei nebeneinander verlaufende, sich in Richtung zum Laufrad 16 im Querschnitt verengende Spiralkanäle 17, 18 gebildet.

Die Gaskanäle 12-15 sind im Dickenbereich der Flanschplatte 6 durch Kehlnähte 16 verschweißt. Ein äußeres 1.Schalenelement 9 ist umfangsseitig des Laufradlagers 20 der Abgasturbine 3 durch eine Kehlnaht 21 verschweißt. Das andere äußere 2.Schalenelement 10 bildet neben zwei Gaskanälen 12, 15 und einem Spiralkanal 18 zusätzlich noch einen Mantel 22 für das Laufrad 16 und im Anschluss an den Mantel 22 einen sich koaxial zur Drehachse 23 des Laufrads 16 erstreckenden zylindrischen Gasauslassstutzen 24. Dieser steht mit der Abgasleitung 25 in Verbindung. Ferner ist aus der Figur 1 erkennbar, dass die drei Schalenelemente 8, 9, 10 entlang der Außenkontur durch eine Schweißnaht 26 miteinander verbunden sind.

Ergänzend sei zur Figur 1 noch erwähnt, dass mit 27 ein mit dem Laufradlager 20 verbundener Flansch und mit 28 die Welle des Laufrads 16 bezeichnet sind.

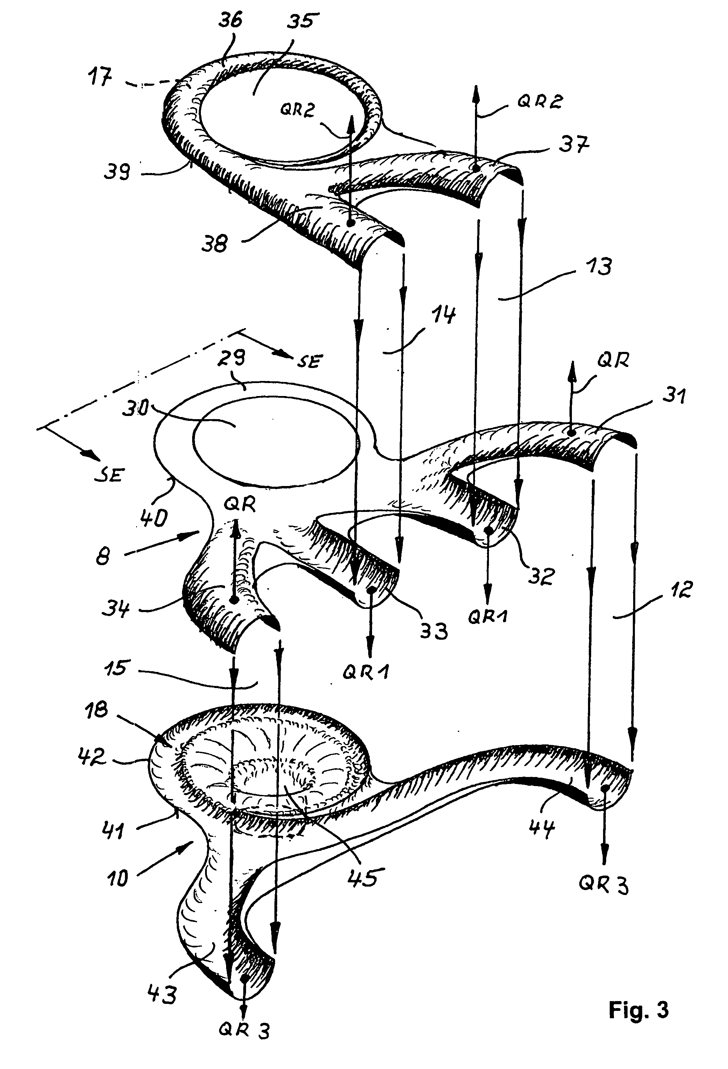

Wie die Figuren 1 und 3 bei gemeinsamer Betrachtung erkennen lassen, besteht das mittlere Schalenelement 8 aus einer kreisringförmigen, sich in einer Ebene SE erstreckenden Scheibe 29 mit exzentrisch versetzter kreisrunder Öffung 30 und aus vier sich von der Scheibe 29 im wesentlichen radial erstreckenden, rinnenartig gekrümmten Fortsätzen 31-34. Von diesen Fortsätzen 31-34 sind die beiden äußeren Fortsätze 31, 34 bezüglich der Scheibenebene SE in eine Querrichtung QR gekrümmt. Die beiden anderen mittleren Fortsätze 32, 33 sind bezüglich der Scheibenebene SE in die andere Querrichtung QR1 gekrümmt. Alle vier Fortsätze 31-34 erstrecken sich im Hinblick auf die Anordnung der Durchgangsöffnungen 7 in der Flanschplatte 6 in einer Reihe.

Durch die rinnenartig gekrümmten Fortsätze 31-34 wird je eine Hälfte eines Gaskanals 12-15 gebildet.

Das äußere 1.Schalenelement 9 ist hinsichtlich seiner Außenkontur an das mittlere Schalenelement 8 unter Einschluss der beiden mittleren Fortsätze 32, 33 angepasst. Ferner weist das 1.Schalenelement 9 eine exzentrisch versetzte Öffnung 35 innerhalb einer rinnenartig gekrümmten kreisringförmigen Scheibe 36 auf. Von dieser Scheibe 36 erstrecken sich zwei in dieselbe Querrichtung QR2 wie die Scheibe 36 rinnenartig gekrümmte Fortsätze 37, 38 derart radial, dass sie zusammen mit den beiden mittleren Fortsätzen 32, 33 des mittleren Schalenelements 8 zwei Gaskanäle 13, 14 bilden. Das 1.Schalenelement 9 ist entlang der Außenkontur 39 mit der Außenkontur 40 des mittleren Schalenelements 8 verschweißt. Folglich ergeben sich zwei Gaskanäle 13, 14 sowie ein Spiralkanal 17.

Das äußere 2.Schalenelement 10 ist ebenfalls hinsichtlich seiner Außenkontur 41 weitgehend an die Außenkontur 40 des mittleren Schalenelements 8 angepasst. Es weist eine rinnenartig gekrümmte kreisringförmige Scheibe 42 und zwei sich von der Scheibe 42 radial erstreckende rinnenartig gekrümmte Fortsätze 43, 44 auf. Diese Fortsätze 43, 44 sind gegengleich zu den beiden äußeren Fortsätzen 31, 34 des mittleren Schalenelements 8 in die Richtung QR3 gekrümmt und bilden folglich zusammen mit diesen beiden Fortsätzen 31, 34 zwei weitere Gaskanäle 12, 15. Die kreisringförmige Scheibe 42 bildet zusammen mit der Scheibe 29 des mittleren Schalenelements 8 den 2.Spiralkanal 18. Die gasdichte Verbindung erfolgt durch Schweißen entlang der Außenkonturen 40, 41.

Außerdem zeigt noch die Figur 3, dass das äußere 2.Schalenelement 10 mit einer den diffusorartigen Mantel 22 für das Laufrad 16 und den Gasauslassstutzen 24 bildenden Aushalsung 45 versehen ist.

Die Ausführungsform einer Anordnung 1a gemäß Figur 2 unterscheidet sich von derjenigen gemäß Figur 1 dadurch, dass das Gasführungsgehäuse 11 unter Bildung eines Luftspalts 46 in ein aus zwei Außenschalen 47, 48 gebildetes Mantelgehäuse 49 eingebettet ist. Die 1.Außenschale 47 ist über ihren der Drehachse 23 des Laufrads 16 benachbarten inneren Randbereich 50 an dem Flansch 27 des Laufradlagers 26 mit einer Kehlnaht 51 fixiert. Die 1.Außenschale 47 geht über eine Krümmung 52 in einen sich etwa parallel zur Drehachse 23 erstreckenden radial äußeren Axialschenkel 53 über. Dieser Axialschenkel 53 wird von einem Axialschenkel 54 der anderen 2.Außenschale 48 des Mantelgehäuses 49 übergriffen. Hierbei ist durch die spezielle Konfiguration der beiden Axialschenkel 53, 54 dafür Sorge getragen, dass zwischen den Axialschenkeln 53, 54 ein etwa V-förmiger Spalt 55 gebildet wird. In diesen Spalt 55 kann, wie in Figur 2 angedeutet, ein kinetische Energie in Verformungsenergie umwandelndes Mittel 56, z.B. in Form eines Drahtgestricks oder Blecheinlagen, eingebettet sein. Die schweißtechnische Fügung der beiden Axialschenkel 53, 54 erfolgt dadurch, dass die Stirnseite 57 des übergreifenden Axialschenkels 54 an der äußeren Oberfläche 58 des eingreifenden Axialschenkels 53 in der Nähe der Krümmung 52 mittels einer Kehlnaht 59 fixiert wird.

Die 2.Außenschale 48 des Mantelgehäuses 49 weist am radial inneren Ende einen Axialstutzen 60 auf. Dieser Axialstutzen 60 ist mit dem Gasauslassstutzen 24 durch eine innere Kehlnaht 61 verbunden.

Im übrigen entspricht die Anordnung 1a derjenigen der Figur 1, so dass eine nochmalige Erläuterung entbehrlich ist.

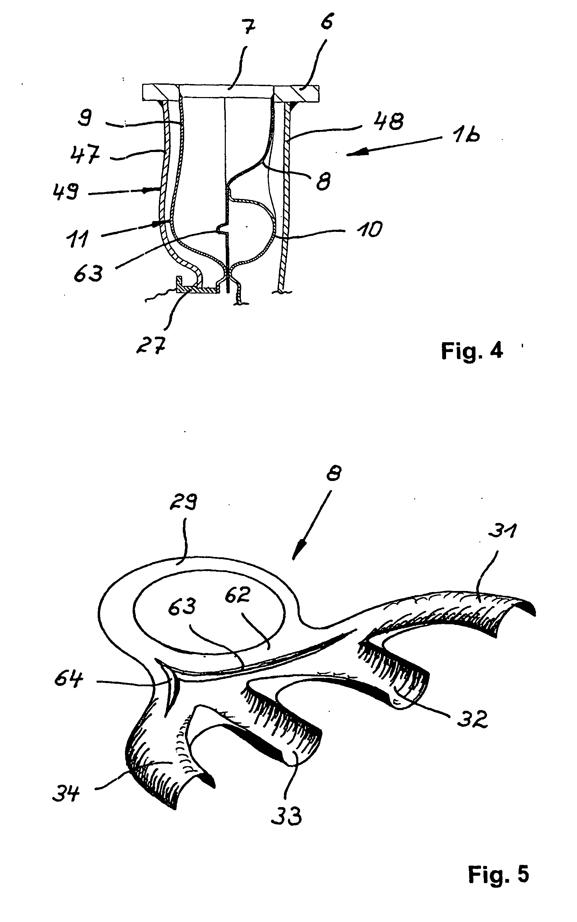

Die Figuren 4 und 5 lassen eine von der Anordnung 1a der Figur 2 abgewandelte Anordnung 1b erkennen, bei welcher das mittlere Schalenelement 8 im Übergangsbereich 62 von der ebenen Scheibe 29 auf die gegengleich rinnenartig gekrümmten Fortsätze 31-34 mit einer sich von der Scheibe 29 zu dem Fortsatz 31 erstreckenden längeren Entlastungssicke 63 und von der Scheibe 29 zu dem Fortsatz 34 erstreckenden kürzeren Entlastungssicke 64 versehen ist.

Ansonsten entspricht die Darstellung der Figur 4 derjenigen der Figur 2, so dass eine nochmalige Erläuterung nicht notwendig ist.

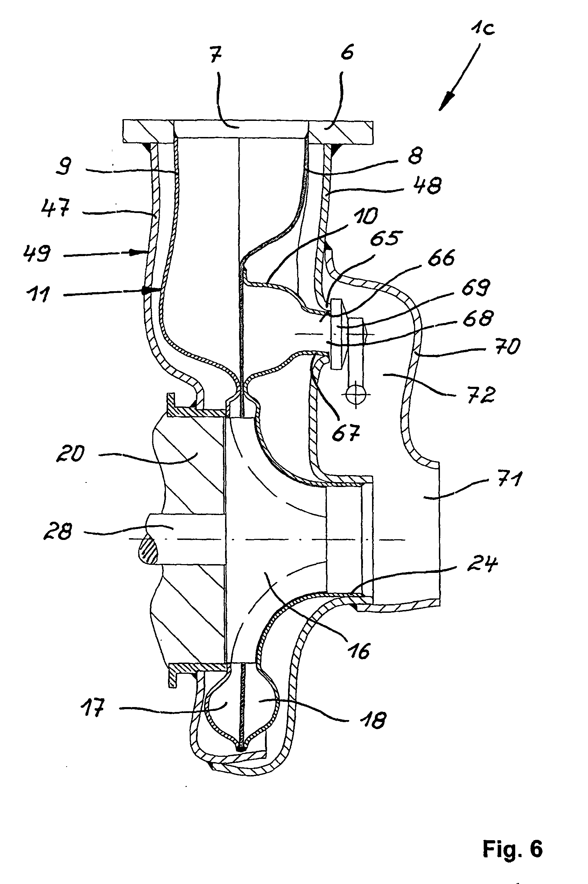

Die Figur 6 lässt eine Anordnung 1c erkennen, die im Grundsatz der Anordnung 1 a gemäß Figur 2 entspricht. Zusätzlich weist die Anordnung 1 c der Figur 6 jedoch eine durch eine Aushalsung 65 gebildete Öffnung 66 in der 2.Außenschale 48 des Mantelgehäuses 49 auf. In diese Öffnung 66 fasst ein Stutzen 67, der einteilig aus dem äußeren 2.Schalenelement 10 gezogen ist. Der Stutzen 67 ist in der Öffnung 66 dicht verschweißt. Die Mündung 68 des Stutzens ist 67 mit einer schwenkbaren Schaltklappe 68 verschließbar.

Außenseitig der 2.Außenschale 48 des Mantelgehäuses 49 ist eine Auffangschale 70 angeschweißt, die mit einer Auslassöffnung 71 versehen ist, welche mit dem Gasauslassstutzen 24 axial ausgerichtet ist.

Durch die Auffangschale 70 und die Schaltklappe 69 wird in Verbindung mit der Mündung 68 des Stutzens 67 ein Bypass 72 zum 2.Spiralkanal 18 gebildet.

### Bezugszeichenaufstellung

- 1 -: Anordnung
- 1a -: Anordnung
- 1b -: Anordnung
- 1c -: Anordnung
- 2 -: Verbrennungsmotor
- 3 -: Abgasturbine
- 4 -: Turbolader
- 5 -: Motorblock v. 2
- 6 -: Flanschplatte
- 7 -: Durchgangsöffnungen in 6
- 8 -: mittleres Schalenelement v. 11
- 9 -: äußeres 1.Schalenelement v. 11
- 10 -: äußeres 2.Schalenelement v. 11
- 11 -: Gasführungsgehäuse
- 12 -: Gaskanal
- 13 -: Gaskanal
- 14 -: Gaskanal
- 15 -: Gaskanal
- 16 -: Laufrad v. 3
- 17 -: 1.Spiralkanal
- 18 -: 2.Spiralkanal
- 19 -: Kehlnähte in 7
- 20 -: Laufradlager
- 21 -: Kehlnaht v. 9 an 20
- 22 -: Mantel f. 16
- 23 -: Drehachse v. 16
- 24 -: Gasauslassstutzen
- 25 -: Abgasleitung
- 26 -: Schweißnaht f. 8, 9, 10
- 27 -: Flansch an 20
- 28 -: Scheibe v. 8
- 30 -: Öffnung in 29
- 31 -: Fortsatz v. 8
- 32 -: Fortsatz v. 8
- 33 -: Fortsatz v. 8
- 34 -: Fortsatz v. 8
- 35 -: Öffnung in 36
- 36 -: Scheibe v. 9
- 37 -: Fortsatz v. 36
- 38 -: Fortsatz v. 36
- 39 -: Außenkontur v. 9
- 40 -: Außenkontur v. 8
- 41 -: Außenkontur v. 10
- 42 -: Scheibe v. 10
- 43 -: Fortsatz v. 10
- 44 -: Fortsatz v. 10
- 45 -: Aushalsung an 10
- 46 -: Luftspalt zw. 11 u. 49
- 47 -: 1.Außenschale v. 49
- 48 -: 2.Außenschale v. 49
- 49 -: Mantelgehäuse
- 50 -: innerer Randbereich v. 47
- 51 -: Kehlnaht zw. 50 u. 27
- 52 -: Krümmung v. 47
- 53 -: Axialschenkel v. 47
- 54 -: Axialschenkel v. 48
- 55 -: Spalt zw. 53 u. 54
- 56 -: Mittel in 55
- 57 -: Stirnseite v. 54
- 58 -: Oberfläche v. 53
- 59 -: Kehlnaht zw. 53 u. 54
- 60 -: Axialstutzen v. 48
- 61 -: Kehlnaht zw. 60 u. 24
- 62 -: Übergangsbereich zw. 29 u. 31-34
- 63 -: Entlastungssicke
- 64 -: Entlastungssicke
- 65 -: Aushalsung in 48
- 66 -: Öffnung in 65
- 67 -: Stutzen an 10
- 68 -: Mündung v. 67
- 69 -: Schaltklappe
- 70 -: Auffangschale
- 71 -: Auslassöffnung v. 70
- 72 -: Bypass

- QR -: Querrichtung
- QR1 -: Querrichtung
- QR2 -: Querrichtung
- QR3 -: Querrichtung
- SE -: Scheibenebene

## Patentansprüche

1. Anordnung zur Überführung der Abgase eines mehrere Zylinder umfassenden Verbrennungsmotors (2) über eine Abgasturbine (3) in eine Abgasleitung (4), welche eine unmittelbar am Motorblock (5) des Verbrennungsmotors (2) festlegbare Flanschplatte (6) mit einer der Zylinderanzahl entsprechenden Anzahl von in Reihe angeordneten Durchgangsöffnungen (7) und ein aus drei quer aneinander gesetzten Schalenelementen (8, 9, 10) aus Stahlblech gebildetes zweiflutiges Gasführungsgehäuse (11) aufweist **dadurch gekennzeichnet dass** ein mittleres Schalenelement (8) und zwei äußere Schalenelemente (9, 10) in die Durchgangsöffnungen (7) dicht eingreifende Gaskanäle (12-15) und umfangsseitig eines Laufrads (16) der Abgasturbine (3) zwei nebeneinander verlaufende, sich in Richtung zum Laufrad (16) im Querschnitt verengende Spiralkanäle (17, 18) gebildet sind, wobei ein äußeres Schalenelement (9) umfangsseitig des Laufradlagers (20) der Abgasturbine (3) befestigt und durch das andere äußere Schalenelement (10) zusätzlich ein Mantel (22) für das Laufrad (16) und im Anschluss an den Mantel (22) ein sich koaxial zur Drehachse (23) des Laufrads (16) erstreckender Gasauslassstutzen (24) gebildet sind.

2. Anordnung nach Patentanspruch 1, bei welcher das mittlere Schalenelement (8) aus einer kreisringförmigen ebenen Scheibe (29) mit exzentrisch versetzter kreisrunder Öffnung (30) und aus sich von der Scheibe (29) im wesentlichen radial erstreckenden, bezüglich der Scheibenebene SE einmal in die eine Querrichtung QR und einmal in die andere Querrichtung QR1 rinnenartig gekrümmten Fortsätzen (31-34) besteht, wohingegen die hinsichtlich ihrer Außenkonturen an das mittlere Schalenelement (8) angepassten äußeren Schalenelemente (9, 10) aus exzentrisch versetzte Öffnungen (35, 45) aufweisenden kreisringförmigen Scheiben (36, 42) mit sich im wesentlichen radial erstreckenden Fortsätzen (37, 38; 43, 44) gebildet sind, die insgesamt in jeweils dieselbe Querrichtung QR2 bzw. QR3 rinnenartig gekrümmte Konfigurationen aufweisen, und wobei das äußere 2.Schalenelement (10) zusätzlich mit einer den Mantel (22) und den Gasauslassstutzen (24) bildenden Aushalsung (45) versehen ist.

3. Anordnung nach Patentanspruch 2, bei welcher das mittlere Schalenelement (8) im Übergangsbereich (62) von der ebenen Scheibe (29) auf die gegengleich rinnenartig gekrümmten Fortsätze (31-34) mit wenigstens einer Entlastungssicke (63, 64) versehen ist.

4. Anordnung nach einem der Patentansprüche 1 bis 3, bei welcher das Gasführungsgehäuse (11) unter Bildung eines Luftspalts (46) in ein aus zwei Außenschalen (47, 48) gebildetes Mantelgehäuse (49) eingebettet ist, wobei die Außenschalen (47, 48) miteinander am radial äußeren Umfang, mit der Flanschplatte (6), umfangsseitig des Laufradlagers (20) und stirnseitig des Gasauslassstutzens (24) verschweißt sind.

5. Anordnung nach einem der Patentansprüche 1 bis 4, bei welcher im Längenverlauf der Gaskanäle (12-15) Schiebesitze vorgesehen sind.

6. Anordnung nach einem der Patentansprüche 1 bis 5, bei welcher die Gaskanäle (12-15) relativ verschieblich in die Durchgangsöffnungen (7) der Flanschplatte (6) eingreifen.

7. Anordnung nach einem der Patentansprüche 4 bis 6, bei welcher zwischen dem Gasführungsgehäuse (11) und dem Mantelgehäuse (49) Drahtgestricke vorgesehen sind.

8. Anordnung nach einem der Patentansprüche 4 bis 7, bei welcher sich die Außenschalen (47, 48) des Mantelgehäuses (49) unter Bildung eines V-förmigen Spalts (55) mit Axialschenkeln (53, 54) am radial äußeren Umfang überlappen, wobei die Stirnseite (57) des übergreifenden Axialschenkels (54) an der äußeren Oberfläche (58) des eingreifenden Axialschenkels (53) verschweißt ist.

9. Anordnung nach Patentanspruch 8, bei welcher in den V-förmigen Spalt (55) zwischen den Axialschenkeln (53, 54) der Außenschalen (47, 48) kinetische Energie umwandelnde Mittel (56) integriert sind.

10. Anordnung nach einem der Patentansprüche 4 bis 9, bei welcher die mit dem Gasauslassstutzen (24) verschweißte 2.Außenschale (48) des Mantelgehäuses (49) mit einer Öffnung (66) versehen ist, in die ein Stutzen (67) des äußeren 2.Schalenelements (10) fasst, wobei die Öffnung (66) durch eine Schaltklappe (69) verschließbar ist, und wobei der 2.Außenschale (48) eine Auffangschale (70) mit Auslassöffnung (71) vorgelagert ist, die mit dem Gasauslassstutzen (24) axial ausgerichtet ist

## Claims

1. Arrangement for transferring the exhaust gases from a multi-cylinder internal combustion engine (2) by way of an exhaust-gas turbine (3) into an exhaust pipe (4), the device having a flange plate (6), directly attachable to the engine block (5) of the internal combustion engine (2) and having a number of passage openings (7) arranged in series and corresponding to the number of cylinders, and a two-flow gas ducting body (11) formed from three sheet steel shell elements (8, 9, 10) arranged horizontally to one another, **characterized in that** a middle shell element (8) and two outer shell elements (9, 10) form gas ducts (12-15), tightly engaging in the passage openings (7), and two spiral ducts (17, 18), running side by side on the periphery of a rotor (16) of the exhaust-gas turbine (3) and having a cross section narrowing towards the rotor (16), one outer shell element (9) being fixed on the periphery of the rotor bearing (20) of the exhaust-gas turbine (3), and the other outer shell element (10) additionally forming a casing (22) for the rotor (16) and adjoining the casing (22) a gas outlet connection (24) extending coaxially with the axis of rotation (23) of the rotor (16).

2. Arrangement according to Claim 1, **characterized in that** the middle shell element (8) comprises an annular, plane disk (29) with eccentrically offset circular opening (30) and extensions (31-34), basically extending radially from the disk (29) and fluted in one lateral direction QR and in the other lateral direction QR1 relative to the disk plane SE, whereas the outer first and second shell elements (9, 10), their external contours adapted to the middle shell element (8) are formed from annular disks (36, 42), having eccentrically offset openings (35, 45) and extensions (37, 38; 43, 44) basically extending radially, which both have configurations each fluted in the same lateral direction QR2 and QR3 respectively, and the second outer shell element (10) being additionally provided with a neck (45) forming the casing (22) and the gas outlet connection (24).

3. Arrangement according to Claim 2, **characterized in that** the middle shell element (8) is provided with at least one relief bead (63, 64) in the transitional area (62) from the plane disk (29) to the reverse fluted extensions (31-34).

4. Arrangement according to any one of Claims 1 to 3, **characterized in that** the gas ducting body (11) is embedded into an outer casing (49) comprising two outer shells (47, 48), forming a air gap (46), the outer shells (47, 48) being welded together at the radially outer periphery, to the flange plate (6), on the periphery of the rotor bearing (20) and to the end face of the gas outlet connection (24).

5. Arrangement according to any one of Claims 1 to 4, **characterized in that** sliding seats are provided in the longitudinal course of the gas ducts (12-15).

6. Arrangement according to any one of Claims 1 to 5, **characterized in that** the gas ducts (12-15) engage with the facility for relative displacement in the passage openings (7) of the flange plate (6).

7. Arrangement according to any one of Claims 4 to 6, **characterized in that** wire gauzes are provided between the gas ducting body (11) and the outer casing (49).

8. Arrangement according to any one of Claims 4 to 7, **characterized in that** the outer shells (47, 48) of the outer casing (49) overlap one another forming a V-shaped gap (55) with axial legs (53, 54) on the radially outer periphery, the end (57) of the overlapping axial leg (54) being welded to the outer surface (58) of the engaging axial leg (53).

9. Arrangement according to Claim 8, **characterized in that** kinetic energy-converting means (56) are integrated into V-shaped gap (55) between the axial legs (53, 54) of the outer shells (47, 48).

10. Arrangement according to any one of Claims 4 to 9, **characterized in that** the second outer shell (48) of the outer casing (49) welded to the gas outlet connection (24) is provided with an opening (66), into which a connection piece (67) of the outer second shell element (10) grips, the opening (66) being closable by means of a control flap (69), and a collecting reservoir (70) with outlet opening (71), which is axially aligned with the gas outlet connection (24), being positioned in front of the second outer shell (48).

## Revendications

1. Dispositif destiné à diriger dans une conduite de gaz d'échappement (4) les gaz d'échappement d'un moteur à combustion interne (2) comportant plusieurs cylindres en passant par une turbine à gaz d'échappement (3), laquelle conduite de gaz d'échappement comprend une tôle à bord rabattu (6) pouvant être fixée directement au bloc des cylindres (5) du moteur à combustion interne (2), dotée d'un nombre d'orifices de passage disposés en série correspondant au nombre de cylindres et un logement de conduite des gaz (11) à double flux conçu en tôle, composé de trois éléments formant coque (8, 9, 10) disposés transversalement les uns par rapport aux autres, **caractérisé en ce qu'**un élément central formant coque (8) et deux éléments extérieurs formant coque (9, 10) forment des canaux de gaz (12 à 15) entrant en engagement de façon étanche dans les orifices de passage (7) et en périphérie d'un rotor (16) de la turbine à gaz d'échappement (3), forment deux canaux en spirale (17, 18) rétrécissant en section transversale en direction du rotor (16), s'étendant l'un à côté de l'autre, un élément extérieur formant coque (9) étant fixé en périphérie du palier de rotor (20) de la turbine à gaz d'échappement (3) et l'autre élément extérieur (10) formant coque formant en plus un revêtement (22) pour le rotor (16) et, raccordée au revêtement (22), une tubulure de sortie des gaz (24) s'étendant dans le sens coaxial par rapport à l'axe de rotation (23) du rotor (16).

2. Dispositif selon la revendication 1, dans lequel l'élément central formant coque (8) est constitué d'un disque plat circulaire (29) doté d'un orifice (30) rond et décalé de façon excentrée et de prolongements (31 à 34) s'étendant sensiblement dans le sens radial à partir du disque (29), courbés à la façon d'une gouttière par rapport au plan de disque SE une fois dans une des directions transversales QR et une fois dans l'autre direction transversale QR1, alors que les éléments extérieurs formant coque (9 et 10), adaptés en ce qui concerne leurs contours extérieurs à l'élément central formant coque (8), sont formés de disques circulaires (36, 42) comprenant des orifices (35, 45) décalés de façon excentrée, et dotés de prolongements (37, 38 ; 43, 44) s'étendant sensiblement dans le sens radial, qui présentent tous dans respectivement ces mêmes directions transversales QR2 et/ou QR3 des configurations courbées à la façon d'une gouttière, et le second élément extérieur formant coque (10) étant pourvu en plus d'un col (45) formant le revêtement (22) et la tubulure de sortie des gaz (24).

3. Dispositif selon la revendication 2, dans lequel l'élément central formant coque (8) est pourvu dans la zone de passage (62) du disque plat (29) aux prolongements (31 à 34) également courbés à la façon d'une gouttière (31 à 34) d'au moins un collet de déchargement (63, 64).

4. Dispositif selon l'une quelconque des revendications 1 à 3, dans lequel le logement de direction des gaz (11) est encastré en formant une fente d'aération (46) dans un logement de revêtement (49) composé de deux coques extérieures (47, 48), les coques extérieures (47, 48) étant soudées l'une à l'autre sur la périphérie extérieure dans le sens radial avec la tôle à bord rabattue (6), en périphérie du palier de rotor (20) et du côté frontal de la tubulure de sortie des gaz (24).

5. Dispositif selon l'une quelconque des revendications 1 à 4, dans lequel des sièges coulissants sont prévus dans le tracé longitudinal des canaux de gaz (12 à 15).

6. Dispositif selon l'une quelconque des revendications 1 à 5, dans lequel les canaux de gaz (12 à 15) entrent en engagement de façon relativement mobile dans les orifices de passage (7) de la tôle à bord rabattu (6).

7. Dispositif selon l'une quelconque des revendications 4 à 6, dans lequel des tricots de fil métallique sont prévus entre le logement de conduite des gaz (11) et le logement de revêtement (49).

8. Dispositif selon l'une quelconque des revendications 4 à 7, dans lequel les coques extérieures (47, 48) du logement de revêtement (49) se chevauchent en formant une fente en forme de V (55) avec les branches axiales (53, 54) sur la périphérie extérieure dans le sens radial, le côté frontal (57) de la branche axiale (54) chevauchée étant soudé à la surface extérieure (58) de la branche axiale (53) mise en engagement.

9. Dispositif selon la revendication 8, dans lequel des moyens (56) transformant l'énergie cinétique sont intégrés dans la fente en forme de V (55) entre les branches axiales (53, 54) des coques extérieures (47, 48).

10. Dispositif selon l'une quelconque des revendications 4 à 9, dans lequel la seconde coque extérieure (48) du logement de revêtement (49) soudée à la tubulure de sortie des gaz (24) est pourvue d'un orifice (66), dans lequel est adaptée une tubulure (67) du second élément extérieur formant coque (10), l'orifice (66) pouvant être fermé par un clapet de commutation (69), et une coque de réception (70) dotée d'un orifice de sortie (71) étant placée devant la seconde coque extérieure (48), lequel orifice est orienté dans le sens axial sur la tubulure de sortie des gaz (24).
